# EUROPÄISCHE PATENTSCHRIFT

(11) **EP 0 458 152 B1**
(45) Veröffentlichungstag und Bekanntmachung des Hinweises auf die Patenterteilung: **20.07.1994**
(21) Anmeldenummer: 91107667.7
(22) Anmeldetag: 11.05.1991
(51) Int. Cl.: C09B 67/22, D06P 1/38

(54) **Farbstoffgemische**
Dyestuff mixtures
Mélanges de colorants

(30) Priorität: 24.05.1990 DE 4016712
(43) Veröffentlichungstag der Anmeldung: 27.11.1991
(73) Patentinhaber: BAYER AG, 51368 Leverkusen (DE)
(72) Erfinder: Stawitz, Josef-Walter, Dr., W-5074 Odenthal-Gloebusch (DE); Stöhr, Frank-Michael, Dr., W-5068 Odenthal-Osenau (DE); Groll, Manfred, Dr., W-5090 Leverkusen (DE); Herd, Karl-Josef, Dr., W-5068 Odenthal-Holz (DE); Schündehütte, Karl-Heinz, Prof. Dr., W-5090 Leverkusen 3 (DE)

(56) Entgegenhaltungen:
- EP-A- 0 192 964
- CH-A- 612 213
- DE-A- 2 162 858

## Beschreibung

Gegenstand der vorliegenden Erfindung sind Farbstoffgemische enthaltend einen oder mehrere Farbstoffe der Formel 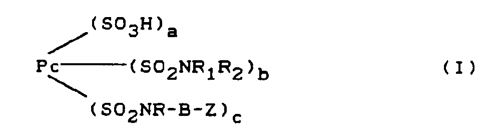
und einen oder mehrere Farbstoffe der Formel 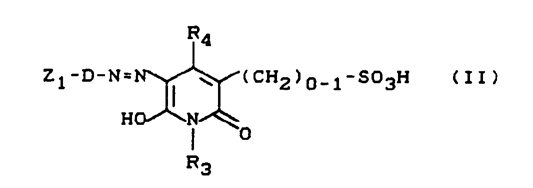
worin
- Pc: Rest eines Kupfer- oder Nickel-phthalocyanins
- R₁, R₂: H, gegebenenfalls substituiertes C₁-C₄-Alkyl oder zusammen gegebenenfalls Heteroatome enthaltender 5- oder 6-Ring,
- R: H, gegebenenfalls substituiertes Alkyl, insbesondere H und CH₃, C₂H₅,
- B: Brückenglied, vorzugsweise gegebenenfalls substituiertes oder durch Heteroatome bzw. Heteroatomgruppen unterbrochenes C₁-C₆-Alkylen oder gegebenenfalls substituiertes Phenylen,
- a, b: 0 bis 3,
- c: 0,8 bis 2, wobei a + b + c = 3 bis 4,
- D: Rest einer Diazokomponente, vorzugsweise gegebenenfalls substituiertes Phenylen oder Naphthylen,
- R₃, R₄: H, gegebenenfalls substituiertes C₁-C₆-Alkyl oder gegebenenfalls substituiertes Phenyl,
- Z, Z₁: faserreaktiven Rest bedeuten.

Geeignete faserreaktive Reste Z und Z₁, d.h. solche die mit den OH- oder NH-Gruppen der Faser unter Färbebedingungen unter Ausbildung kovalenter Bindungen reagieren, sind insbesondere solche, die mindestens einen reaktiven Substituenten an einen 5- oder 6-gliedrigen aromatisch-heterocyclischen Ring gebunden enthalten, beispielsweise an einen Monoazin-, Diazin- oder Triazinring, insbesondere einen Pyridin-, Pyrimidin-, Pyridazin-, Pyrazin-, Triazin-, Oxazin- oder asymmetrischen oder symmetrischen Triazinring, oder an ein derartiges Ringsystem, welches einen oder mehrere ankondensierte aromatisch-carbocyclische Ringe aufweist, beispielsweise ein Chinolin-, Phthalazin-, Cinnolin-, Chinazolin-, Chinoxalin-, Acridin-, Phenazin- und Phenanthridin-Ring-System.

Unter den reaktiven Substituenten am Heterocyclus sind beispielsweise zu erwähnen Halogen (Cl, Br oder F), Ammonium einschließlich Hydrazinium, Pyridinium, Picolinium, Carboxypyridinium, Sulfonium, Sulfonyl, Azido- (N₃), Rhodanido, Thiolether, Oxiether, Sulfinsäure und Sulfonsäure.

Im einzelnen sind beispielsweise zu nennen:

2,4-Difluortriazinyl-6-, 2,4-Dichlortriazinyl-6-, Monohalogen-sym.-triazinylreste, insbesondere Monochlor- und Monofluortriazinylreste, die durch Alkyl, Aryl, Amino, Monoalkylamino, Dialkylamino, Aralkylamino, Arylamino, Morpholino, Piperidino, Pyrrolidino, Piperazino, Alkoxy, Aryloxy, Alkylthio, Arylthio substituiert sind, wobei Alkyl vorzugsweise gegebenenfalls substituiertes C₁-C₄-Alkyl, Aralkyl vorzugsweise gegebenenfalls substituiertes Phenyl-C₁-C₄-alkyl und Aryl vorzugsweise gegebenenfalls substituiertes Phenyl oder Naphthyl bedeutet und wobei bevorzugte Substituenten für Alkyl Halogen, Hydroxy, Cyan, Vinylsulfonyl, substituiertes Alkylsulfonyl, Dialkylamino, Morpholino, C₁-C₄-Alkoxy, Vinylsulfonyl-C₂-C₄-alkoxy, substituierte Alkylsulfonyl-C₂-C₄-alkoxy, Carboxy, Sulfo oder Sulfato sind und für Phenyl und Naphthyl, Sulfo, C₁-C₄-Alkyl, C₁-C₄-Alkoxy, Carboxy, Halogen, Acylamino, Vinylsulfonyl, substituiertes Alkylsulfonyl, Hydroxy, Amino, Mono-, Di- und Trihalogenpyrimidinyl, beispielsweise 2,4-Dichlor-, 2,4,5-Trichlor-pyrimidinyl-4, 2,6-Difluor-5-chlor-, 6-Fluor-5-chlor-pyrimidinyl-4.

Weiterhin sind zu nennen Vinylsulfonylgruppen und Derivate davon, z.B. -SO₂-CH=CH₂ und -SO₂CH₂CH₂X mit X = abspaltbaren Gruppen (beispielsweise Cl, OSO₃H).

Die Reaktivgruppen Z und Z₁, die Reste R₁ und R₂ und die Reste R₃ und R₄ Können gleich oder verschieden sein,

Die Reste Z und Z₁ sind im Falle der heterocyclischen Reste vorzugsweise über -NH- oder -NR- an B oder gegebenenfalls über ein Brückenglied an ein aromatisches Ring-C-Atom in D gebunden, die Gruppe -SO₂CH₂CH₂X bzw. -SO₂CH=CH₂ ist vorzugsweise an ein aromatisches oder aliphatisches C-Atom in B oder D gebunden.

Geeignete Reste B sind insbesondere Phenylen, gegebenenfalls substituiert durch C₁-C₄-Alkyl, C₁-C₄-Alkoxy, Halogen, insbesondere Cl, Nitro, Cyan, COOH, SO₃H, Carbonamid, Sulfonamid, Acylamino, insbesondere C₁-C₄-Alkylcarbonylamino oder -NHCONH₂ oder aber C₂-C₆-Alkylen.

Beispielhaft seien folgende Reste B genannt: 1,2-Phenylen, 1,3-Phenylen, 1,4-Phenylen, 3-Methyl-1,4-phenylen, 2-Methyl-1,4-phenylen, 2-Methyl-5-chlor-1,4-phenylen, 4-Methoxy-1,3-phenylen, 3-Methoxy-1,4-phenylen, 4-Chlor-1,3-phenylen, 2-Chlor-1,4-phenylen, 5-Carbonamido-1,3-phenylen, 1,4-Phenylen-2-sulfonsäure, 1,3-Phenylen-4-sulfonsäure, 1,3-Phenylen-5-carbonsäure, 1,3-Phenylen-4-carbonsäure. Als Beispiele für Alkylen-Reste seien genannt:
-CH₂-CH₂-, 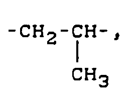
-CH₂CH₂CH₂-, -CH₂CH₂CH₂CH₂- .

Bevorzugte Reste R₃ sind:
H, ein gegebenenfalls durch OH, SO₃H, OSO₃H, NH₂, CO₂H, NH(C₁-C₄-Alkyl), C₁-C₄-Alkoxy substituierter C₁-C₆-Alkylrest, ein cycloaliphatischer C₃-C₆-Kohlenwasserstoffrest, ein gegebenenfalls durch SO₃H, CO₂H, CH₃, Cl, Br, OCH₃, OC₂H₅, NH₂, NH(C₁-C₄-Alkyl) substituiertes Phenyl oder Hetarylrest.

Bevorzugte Reste R₄ sind:
H, OH ein gegebenenfalls durch Cl, OH, SO₃H, OSO₃H, CO₂H substituierter C₁-C₄-Alkylrest; ein gegebenenfalls durch SO₃H, CO₂H, CH₃, Cl, Br, OCH₃, OC₂H₅, NH₂, NH(C₁-C₄-Alkyl) substituierter Phenyl- bzw. Benzylrest oder CO₂H und
D steht bevorzugt für einen sulfogruppenhaltigen Rest der Benzol-, Azobenzol- oder Naphthalin-Reihe und kann weitere übliche Substituenten aufweisen, beispielsweise SO₃H, COOH, C₁-C₄-Alkyl, Cl, Br, C₁-C₄-Alkoxy, Acylamino wie C₁-C₄-Alkylcarbonylamino, C₁-C₄-Alkylsulfonylamino, gegebenenfalls substituiertes Phenylcarbonylamino, Ureido.

Bevorzugte Farbstoffe (I) und (II) sind solche mit Fluorpyrimidyl-Reaktivrest, insbesondere 5-Chlor-6-fluorpyrimidyl-4-Rest.

Bevorzugte Farbstoffe (I) sind solche der Formel 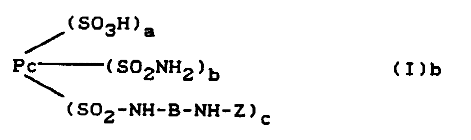
mit
- B: = C₂-C₆-Alkylen oder Phenylen,
- Z: = Fluorpyrimidyl, insbesondere 5-Chlor-2,6-difluorpyrimidyl-4 und 5-Chlor-6-fluorpyrimidyl-4,
- a: = 1,5 bis 3, vorzugsweise 1,5 bis 2,5
- b: = 0 bis 1,5
- c: = 0,8 bis 2,0 und
- a + b + c: = 3 bis 4

Besonders bevorzugte Farbstoffe sind solche der Formel 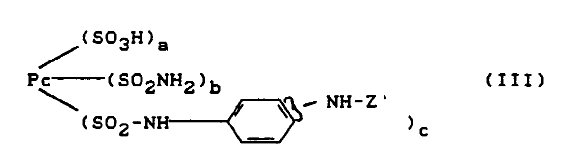
mit
- Z′: = Fluorpyrimidyl, insbesondere 5-Chlor-6-fluorpyrimidyl-4 und
- a: = 1,5 bis 3, vorzugsweise 1,5 bis 2,5,
- b: = 0 bis 1,5
- c: = 0,8 bis 1,2 und a + b + c = 3 bis 4.

Bevorzugte Farbstoffe (II) sind solche der Formel 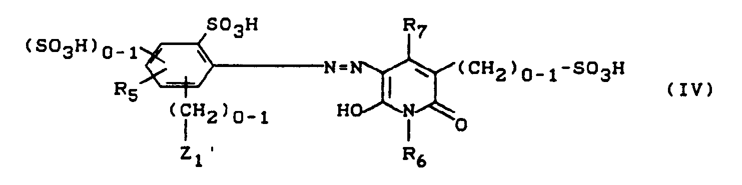
mit
- R₅: = H, C₁-C₄-Alkyl, Cl,
- R₆, R₇: = C₁-C₄-Alkyl.

Die erfindungsgemäßen Gemische können in fester, insbesondere pulvriger Form oder in Granulatform vorliegen. Sie enthalten in der Regel zusätzlich Elektrolytsalze wie NaCl, KCl, Na₂SO₄ die aus der Synthese stammen können, weiterhin Puffersubstanzen wie Alkaliacetate, Alkaliphosphate oder -hydrogenphosphate, Na-Borat. Weiterhin können andere für Farbstoffpräparationen übliche Substanzen enthalten sein, beispielsweise hydrotrope Mittel, Netzmittel, Fixiermittel, Sikkative, Fungizide, Färbehilfsmittel.

Die Gemische können auch als wäßrige oder wäßrigorganische Lösung vorliegen, wobei der pH-Wert im allgemeinen bei etwa 4 bis 9 liegt.

Die Gemische können zusätzlich auch faserreaktive Farbstoffe anderer Konstitution und Nuance enthalten, mit denen in üblicher Weise Mischnuancen erhältlich sind.

Bevorzugte Gemische sind solche, welche die Farbstoffe (I) und (II) als einzige chromophore reaktive Substanzen enthalten, sowie Mischungen von Farbstoffen der Formeln Ib und IV.

Die erfindungsgemäßen Farbstoffmischungen lassen sich in an und für sich üblicher Weise herstellen, wie beispielsweise durch Vermischen der einzelnen festen Farbstoffkomponenten, die aus der Synthese durch Aussalzen oder Sprühtrocknung der Syntheselösung erhältlich sind, oder durch Vermischen der Syntheselösungen der einzelnen Farbstoffkomponenten und anschließender gemeinsamer Isolierung durch Aussalzen oder Sprühtrocknung. Hierbei können die üblichen, obengenannten Zusätze den Lösungen selbst, evtl. vor deren Sprühtrocknung, oder den festen Einzelkomponenten oder deren Mischungen zugegeben werden.

In den erfindungsgemäßen Farbstoffgemischen sind die Farbstoffe (I) und die Farbstoffe (II) im allgemeinen im Gewichtsverhältnis 95:5 bis 5:95 enthalten, Bevorzugtes Mischungsverhältnis ist 70:30 bis 30:70, insbesondere 60:40 bis 40:60.

Die Farbstoffe (I) und (II) sind bekannt oder in ihrem chemischen Aufbau bekannten Farbstoffen analog, so daß die per se noch nicht beschriebenen Farbstoffe analog den per se beschriebenen Farbstoffe hergestellt werden können.

Farbstoffe (I) sind beispielsweise beschrieben in DE-A 16 44 681, DE-A 28 53 823, DE-A 35 03 747 und DE-A 36 03 124.

Farbstoffe (II) sind beispielsweise beschrieben in DE-A 21 62 612, DE-A 21 62 858 und DE-A 20 50 901.

Die erfindungsgemäßen Gemische finden Verwendung zum Färben und Bedrucken von hydroxylgruppen- und amidgruppenhaltigen Materialien, insbesondere Cellulose.

Kombinationen von Phthalocyaninfarbstoffen mit gelben Azofarbstoffen zeigen oft Nachteile. So besitzen beispielsweise Phthalocyaninfarbstoffe ein ganz anderes Ziehvermögen als Azofarbstoffe, was oft zu Abweichungen vom gewünschten Farbton oder zu unegalen Färbungen führt. In manchen Fällen liegen die Farbstoffe sogar nur dichroitisch auf der Faser vor, obwohl dies nicht zu erwarten wäre aufgrund der Eigenschaften der Einzelkomponenten. Um diese Nachteile wenigstens teilweise auszuschalten, müssen ganz bestimmte Färbebedingungen eingehalten werden Ein Abweichen von diesen eng begrenzten Bedingungen liefert deutlich schlechtere Färbungen.

Demgegenüber ziehen die erfindungsgemäßen Gemische überraschenderweise Ton-in-Ton gleichmäßig auf die Faser auf, ergeben ein schöneres Warenbild und sind gut in zahlreichen Färbeverfahren einsetzbar.

Erwähnt seien folgende:

Färben aus langer Flotte a) unter Erwärmen von 40°C auf 80°C unter Zusatz von Soda, Na-Bicarbonat oder NaOH
b) bei konstanter Temperatur, z.B. 80°C unter Zusatz von Soda oder Soda/NaOH,
c) nach der "all-in"-Methode, nämlich Lösen der Farbstoffmischung mit Alkali bei 50°C und anschließendes Erwärmen auf 80°C.

### Beispiel 1

320 mg einer Farbstoffmischung aus 62 Gew.-% des Phthalocyaninfarbstoffs der Formel 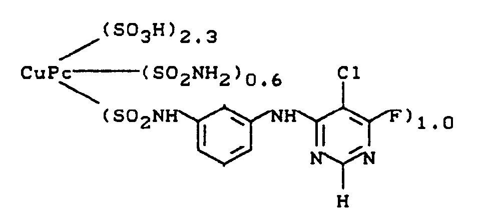
und 38 Gew.-% des Azofarbstoffs der Formel 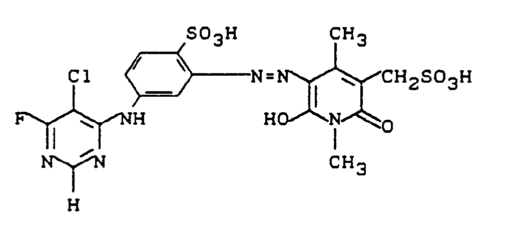
werden in 200 ml Wasser gelöst. Nach Zusatz von 10 g Kochsalz werden der Lösung 10 g Baumwollwirkware zugegeben. Unter ständiger Bewegung der Färbeflotte wird auf 80°C erhitzt und eine halbe Stunde bei 80°C gehalten. Dann werden dem Färbebad 2 ml einer 20 %igen Sodalösung und nach weiteren 30 Minuten 1 ml einer 10 %igen Natronlauge zugefügt und 90 Minuten bei 80°C fertig gefärbt. Man nimmt die gefärbte Ware aus der Färbeflotte, spült das Material gründlich zunächst mit kaltem und dann mit heißem Wasser so lange, bis die Spülflotte nicht mehr gefärbt ist. Anschließend wird die gefärbte Ware noch zweimal 10 Minuten mit Wasser bei Kochtemperatur behandelt. Nach einem weiteren Spülprozess und Trocknen bei 60-70°C erhält man eine Baumwollwirkware, die in einem brillanten Grünton gefärbt ist.

### Beispiel 2

Setzt man die Färbeflotte mit gleichen Farbstoffmengen wie in Beispiel 1 an, gibt aber schon bei 50°C Sodalösung und Natronlauge zu, und färbt dann durch Erhitzen auf 80°C fertig, so erhält man nach den gleichen Spülprozessen eine Baumwollwirkware mit dem gleichen brillanten Grünton wie in Beispiel 1.

### Beispiel 3

Verfährt man wie in Beispiel 1 oder 2, setzt aber den Phthalocyaninfarbstoff der Formel 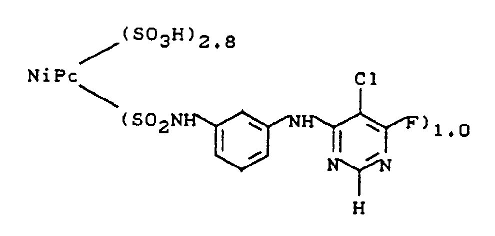
ein, so erhält man einen brillanten Grünton mit ganz hervorragenden Echtheiten.

### Beispiel 4

Verfährt man wie in Beispiel 1 oder 2, setzt aber den Phthalocyaninfarbstoff der Formel 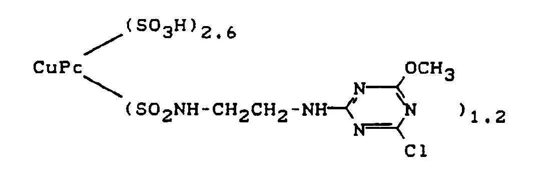
ein, so erhält man Baumwollwirkware in einer brillanten Grünnuance.

### Beispiel 5

Verfährt man wie in Beispiel 1, setzt aber den Phthalocyaninfarbstoff der Formel 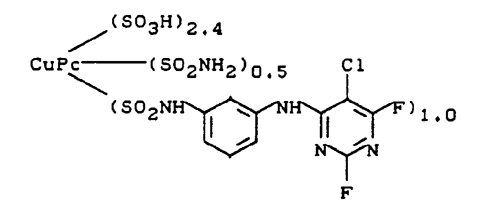
ein, so erhält man Baumwollwirkware in brillanter Grünnuance.

### Beispiel 6

Die Lösungen von 0,5 g Phthalocyaninfarbstoff der Formel 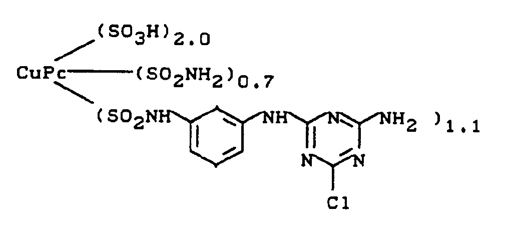
in 100 ml heißem Wasser und 0,2 g Azofarbstoff der Formel 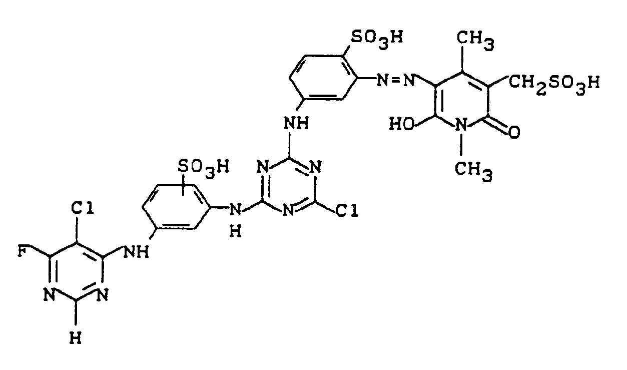
in 40 ml heißem Wasser werden gemeinsam mit 160 ml 20 %iger Kochsalzlösung und 4 ml einer 20 %igen Sodalösung in 150 ml Wasser eingegossen. Nach Zugabe von 20 g Baumwollwirkware wird unter ständiger Bewegung der Färbeflotte 30 Minuten bei 50°C gehalten, dann in 30 Minuten auf 80°C geheizt. Bei 80°C werden 36 ml einer 20 %igen Sodalösung und 5,4 ml einer 10 %igen Natronlauge zugegeben und 90 Minuten bei 80°C fertig gefärbt. Nach Spülung und Trocknung analog Beispiel 1 erhält man Baumwollwirkware in brillanten Grüntönen.

### Beispiel 7

Verfährt man analog Beispiel 1, setzt aber den Phthalocyaninfarbstoff der Formel 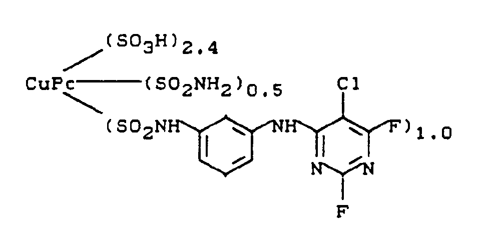
und den Azofarbstoff der Formel 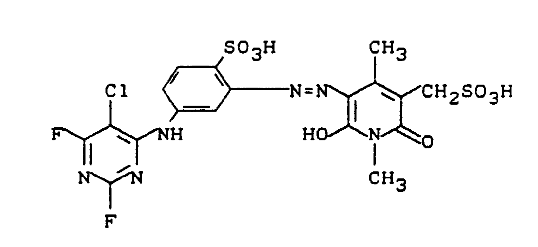
ein, so erhält man Baumwollwirkware, die in einem brillanten Grünton gefärbt ist.

### Beispiel 8

Verfährt man wie in Beispiel 1, setzt aber den Phthalocyaninfarbstoff der Formel 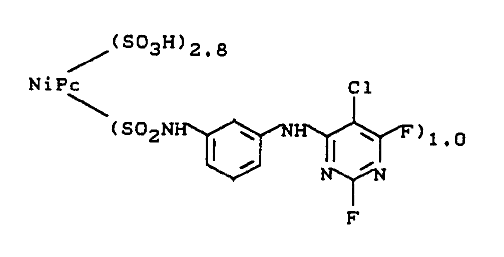
ein, so erhält man einen brillanten Grünton mit ganz hervorragenden Echtheiten.

## Patentansprüche

1. Farbstoffgemische enthaltend einen oder mehrere Farbstoffe der Formel 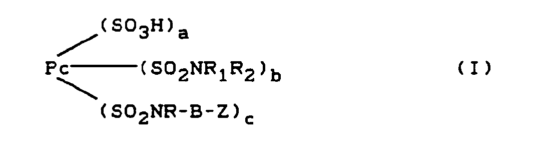 und einen oder mehrere Farbstoffe der Formel 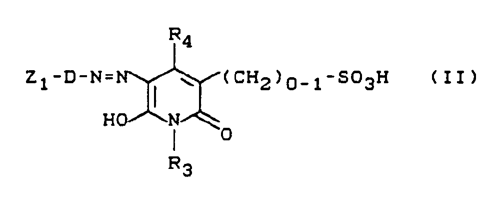 worin
Pc Rest eines Kupfer- oder Nickel-phthalocyanins
R₁, R₂ H, gegebenenfalls substituiertes C₁-C₄-Alkyl oder zusammen gegebenenfalls Heteroatome enthaltender 5- oder 6-Ring,
R H, gegebenenfalls substituiertes Alkyl,
B Brückenglied, vorzugsweise gegebenenfalls substituiertes oder durch Heteroatome bzw. Heteroatomgruppen unterbrochenes C₁-C₆-Alkylen oder gegebenenfalls substituiertes Phenylen,
a, b 0 bis 3,
c 0,8 bis 2, wobei a + b + c = 3 bis 4,
D Rest einer Diazokomponente, vorzugsweise gegebenenfalls substituiertes Phenylen oder Naphthylen,
R₃, R₄ H, gegebenenfalls substituiertes C₁-C₆-Alkyl oder gegebenenfalls substituiertes Phenyl,
Z, Z₁ faserreaktiver Rest,

2. Farbstoffgemische gemäß Anspruch 1, enthaltend einen oder mehrere Farbstoffe der Formel 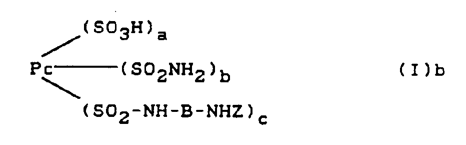 mit
B = C₂-C₆-Alkylen oder Phenylen,
Z = Fluorpyrimidyl, insbesondere 5-Chlor-2,6-difluorpyrimidyl-4 und 5-Chlor-6-fluorpyrimidyl-4,
a = 1,5 bis 3, vorzugsweise 1,5 bis 2,5
b = 0 bis 1,5
c = 0,8 bis 2,0 und
a+b+c = 3 bis 4.

3. Farbstoffgemische gemäß Anspruch 1, enthaltend einen oder mehrere Farbstoffe I der Formel (III) 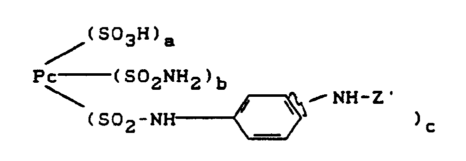 mit
Z′ Fluorpyrimidyl, insbesondere 5-Chlor-6-fluorpyrimidyl-4 und
a 1,5 bis 3, vorzugsweise 1,5 bis 2,5,
b 0 bis 1,5
c 0,8 bis 1,2 und a + b + c = 3 bis 4,
und einen oder mehrere Farbstoffe II der Formel (IV) 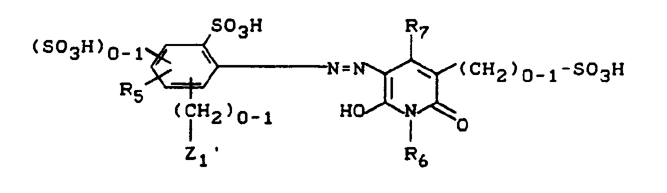 mit
R₅ H, C₁-C₄-Alkyl, Cl,
R₆, R₇ C₁-C₄-Alkyl.

4. Farbstoffgemische nach wenigstens einem der vorhergehenden Ansprüche, dadurch gekennzeichnet, daß bedeuten
R = H, CH₃, C₂H₅.

5. Farbstoffgemische nach wenigstens einem der vorhergehenden Ansprüche, dadurch gekennzeichnet, daß bedeuten
Z, Z₁: Reaktivgruppe mit mindestens einem reaktiven Substituenten an einem 5- oder 6-gliedrigen aromatisch-heterocyclischen Ring, Vinylsulfonylgruppe oder Derivate davon.

6. Farbstoffgemische nach wenigstens einem der vorhergehenden Ansprüche, dadurch gekennzeichnet, daß bedeuten
Z, Z₁ = 5-Chlor-2,6-difluorpyrimidyl-4 und 5-Chlor-6-fluorpyrimidyl-4.

7. Farbstoffgemische nach wengistens einem der vorhergehenden Ansprüche, dadurch gekennzeichnet, daß die Gemische Farbstoffe I und II als einzige chromophore reaktive Substanzen enthalten.

8. Farbstoffgemische gemäß wenigstens einem der vorhergehenden Ansprüche, dadurch gekennzeichnet, daß Farbstoff I einer der folgenden Formeln entspricht 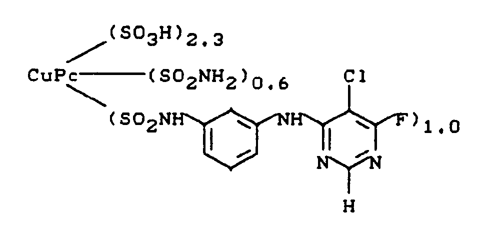 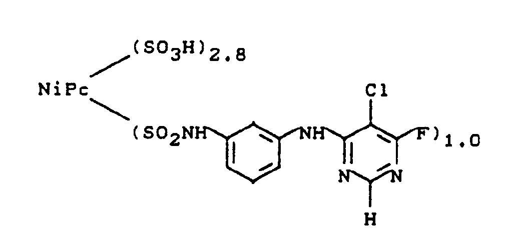 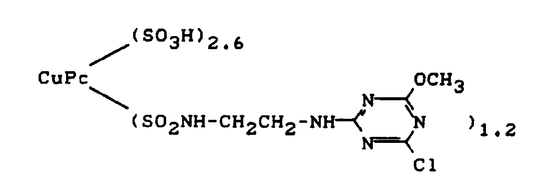 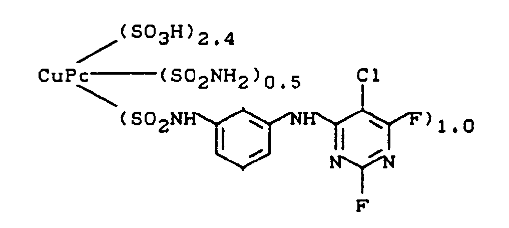 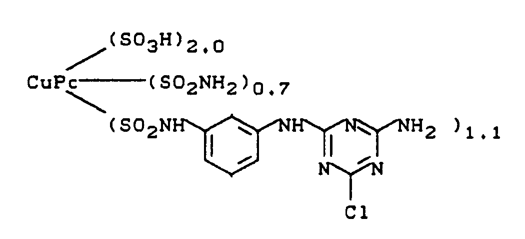 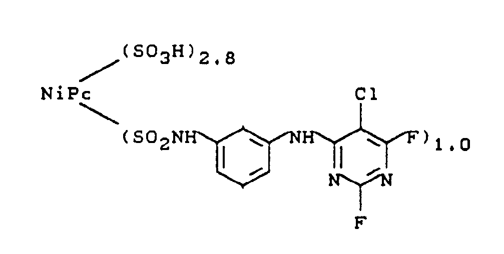 und Farbstoff II einer der folgenden Formeln entspricht

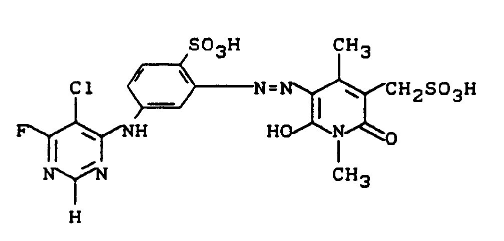

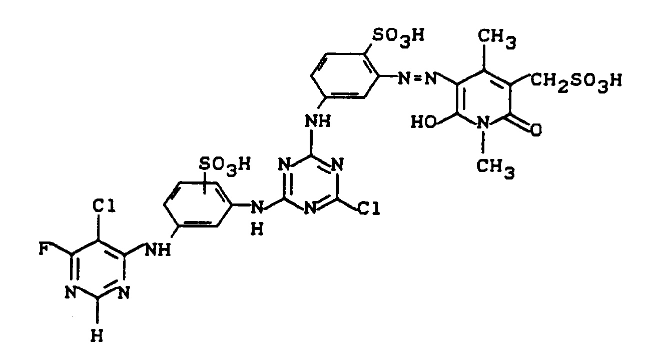

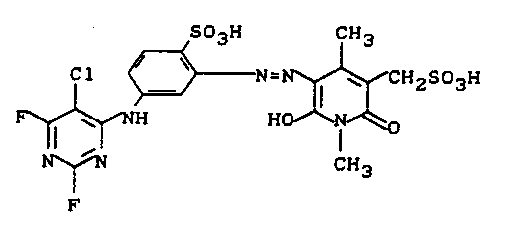

9. Farbstoffgemische gemäß wenigstens einem der vorhergehenden Ansprüche, dadurch gekennzeichnet, daß das Gewichtsverhältnis der Farbstoffe I:II = 95:5 bis 5:95.

10. Verfahren zum Färben von Hydroxyl- oder Amidgruppen enthaltenden Materialien mit einem Farbstoffgemisch, dadurch gekennzeichnet, daß man ein Gemisch gemäß wenigstens einem der vorhergehenden Ansprüche verwendet.

## Claims

1. Dyestuff mixtures containing one or more dyestuffs of the formula 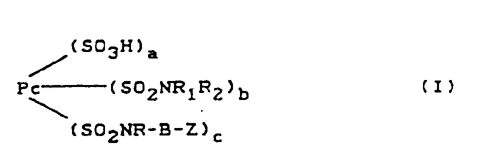 and one or more dyestuffs of the formula 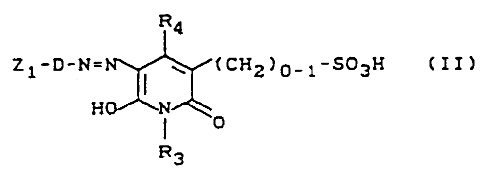 in which
Pc is a radical of a copper phthalocyanine or of a nickel phthalocyanine,
R₁, R₂ are H, substituted or unsubstituted C₁-C₄-alkyl or together a 5- or 6-membered ring which may contain hetero atoms,
R is H, substituted or unsubstituted alkyl,
B is a bridging member, preferably C₁-C₆-alkylene which is substituted or unsubstituted or interrupted by hetero atoms or hetero atom groups or is substituted or unsubstituted phenylene,
a, b are 0 to 3
c is 0.8 to 2, a + b + c being 3 to 4,
D is a radical of a diazo component, preferably substituted or unsubstituted phenylene or naphthylene,
R₃, R₄ are H, substituted or unsubstituted C₁-C₆-alkyl or substituted or unsubstituted phenyl,
Z, Z₁ are a fibre-reactive radical.

2. Dyestuff mixtures according to Claim 1, containing one or more dyestuffs of the formula 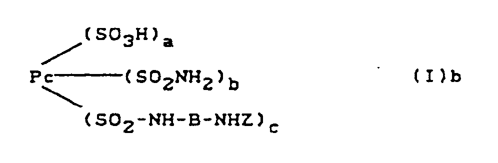 where
B is C₂-C₆-alkylene or phenylene,
Z is fluoropyrimidyl, in particular 5-chloro-2,6-difluoro-4-pyrimidyl and 5-chloro-6-fluoro-4-pyrimidyl,
a is 1.5 to 3, preferably 1.5 to 2.5,
b is 0 to 1.5,
c is 0.8 to 2.0, and
a+b+c is 3 to 4.

3. Dyestuff mixtures according to Claim 1, containing one or more dyestuffs I of the formula (III) 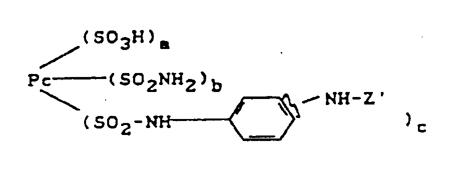 where
Z′ is fluoropyrimidyl, in particular 5-chloro-6-fluoro-4-pyrimidyl and
a is 1.5 to 3, preferably 1.5 to 2.5,
b is 0 to 1.5,
c is 0.8 to 1.2 and a + b + c is 3 to 4,
and one or more dyestuffs II of the formula (IV) 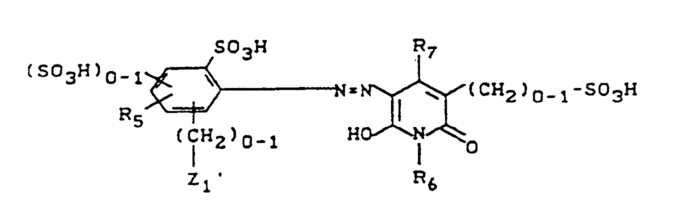 where
R₅ is H, C₁-C₄-alkyl, Cl,
R₆, R₇ are C₁-C₄-alkyl.

4. Dyestuff mixtures according to at least one of the preceding claims, characterized in that
R denotes H, CH₃, C₂H₅.

5. Dyestuff mixtures according to at least one of the preceding claims, characterized in that
Z, Z₁ denote a reactive group containing at least one reactive substituent on a 5- or 6-membered aromatic-heterocyclic ring, a vinylsulphonyl group or derivatives thereof.

6. Dyestuff mixtures according to at least one of the preceding claims, characterized in that
Z, Z₁ denote 5-chloro-2,6-difluoro-4-pyrimidyl and 5-chloro-6-fluoro-4-pyrimidyl.

7. Dyestuff mixtures according to at least one of the preceding claims, characterized in that the mixtures contain dyestuffs I and II as the only chromophoric reactive substances.

8. Dyestuff mixtures according to at least one of the preceding claims, characterized in that dyestuff I has one of the following formulae 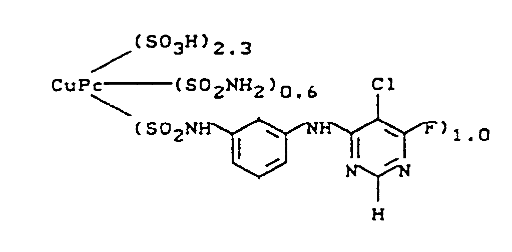 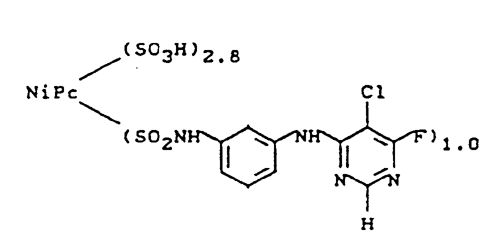 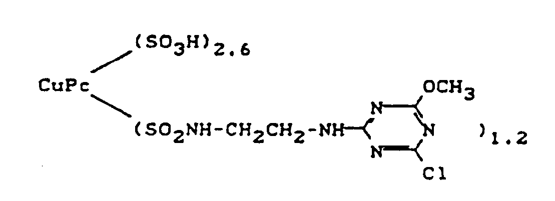 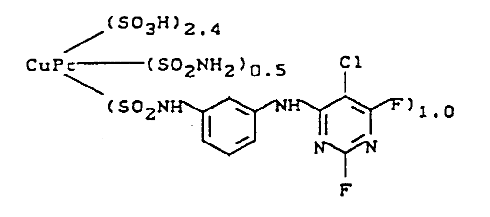 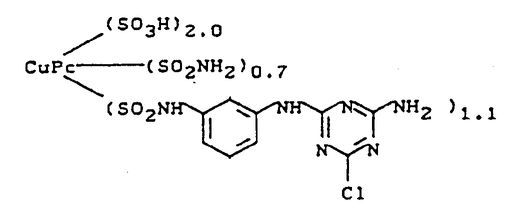 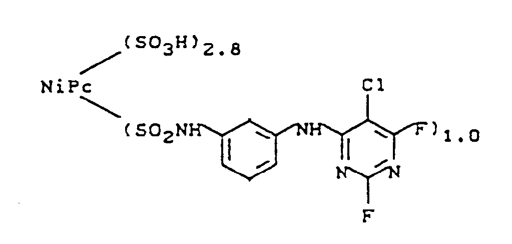 and dyestuff II has one of the following formulae

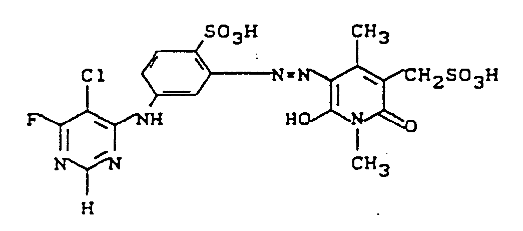

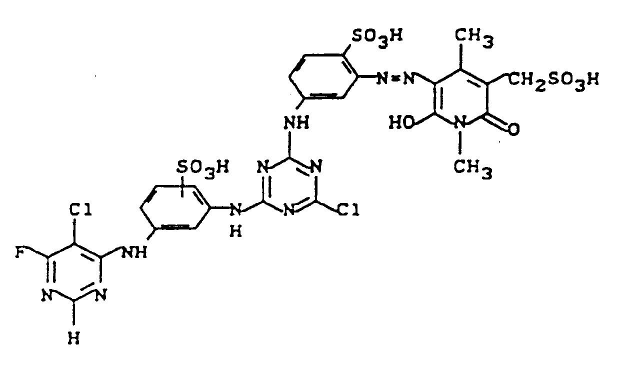

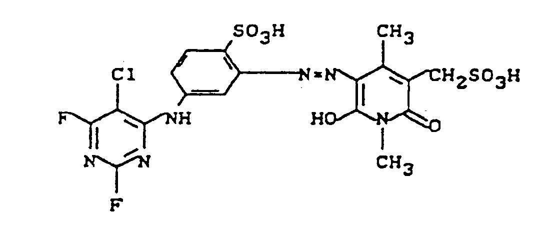

9. Dyestuff mixtures according to at least one of the preceding claims, characterized in that the weight ratio of dyestuffs I:II is 95:5 to 5:95.

10. Process for dyeing hydroxyl- or amido-containing materials with a dyestuff mixture, characterized in that a mixture according to at least one of the preceding claims is used.

## Revendications

1. Mélanges de colorants contenant un ou plusieurs colorants de formule 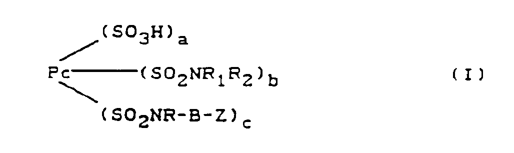 et un ou plusieurs colorants de formule 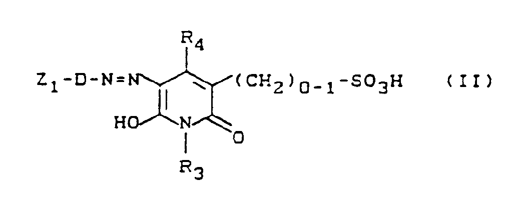 dans lesquelles
Pc représente un radical d'une phtalocyanine de cuivre ou de nickel,
R₁, R₂ représentent H, un groupe alkyle en C₁-C₄ éventuellement substitué ou encore, ensemble, un noyau penta- ou hexagonal contenant éventuellement des hétéroatomes,
R représente H, un groupe alkyle éventuellement substitué,
B représente un pont, de préférence un groupe alkylène en C₁-C₆ éventuellement substitué ou interrompu par des hétéroatomes ou par des groupes d'hétéroatomes, ou encore un groupe phénylène éventuellement substitué,
a, b représentent 0 à 3
c représente 0,8 à 2, a + b + c étant égal à 3-4,
D représente un radical d'un composant diazoïque, de préférence un groupe phénylène ou un groupe naphtylène éventuellement substitués,
R₃, R₄ représentent H, un groupe alkyle en C₁-C₆ éventuellement substitué ou encore un groupe phényle éventuellement substitué,
Z, Z₁ représentent un radical qui réagit avec des fibres.

2. Mélanges de colorants selon la revendication 1, contenant un ou plusieurs colorants de formule 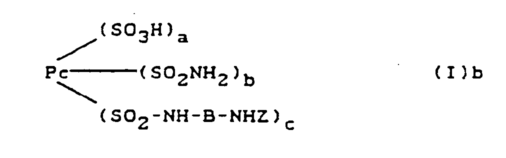 dans laquelle
B représente un groupe alkylène en C₂-C₆ ou un groupe phénylène,
Z représente un groupe fluoropyrimidyle, en particulier un groupe 5-chloro-2,6-difluoropyrimidyle-4 et un groupe 5-chloro-6-fluoropyrimidyle-4,
a représente 1,5 à 3, de préférence 1,5 à 2,5,
b représente 0 à 1,5,
c représente 0,8 à 2,0, et
a+b+c représente 3 à 4.

3. Mélanges de colorants selon la revendication 1, contenant un ou plusieurs colorants I de formule (III) 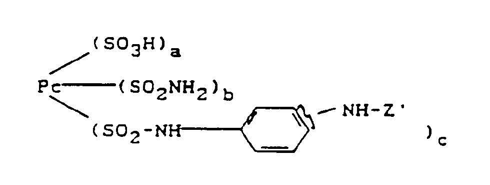 dans laquelle
Z′ représente un groupe fluoropyrimidyle, en particulier un groupe 5-chloro-6-fluoropyrimidyle-4, et
a représente 1,5 à 3, de préférence 1,5 à 2,5,
b représente 0 à 1,5,
c représente 0,8 à 1,2, et a+b+c = 3 à 4,
et un ou plusieurs colorants II de formule (IV) 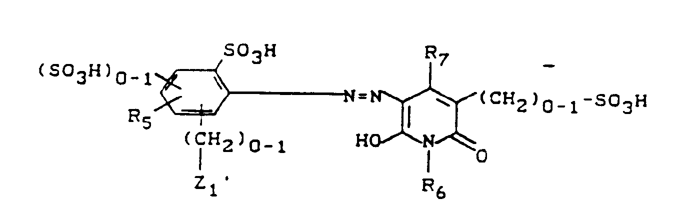 dans laquelle
R₅ représente H, un groupe alkyle en C₁-C₄, Cl,
R₆, R₇ représentent un groupe alkyle en C₁-C₄.

4. Mélanges de colorants selon au moins une des revendications précédentes, caractérisés en ce que R représente H, CH₃, C₂H₅.

5. Mélanges de colorants selon au moins une des revendications précédentes, caractérisés en ce que
Z, Z₁ représentent un groupe réactif contenant au moins un substituant réactif sur un noyau aromatique-hétérocyclique penta- ou hexagonal, un groupe vinylsulfonique ou des dérivés de ce dernier.

6. Mélanges de colorants selon au moins une des revendications précédentes, caractérisés en ce que
Z, Z₁ représentent un groupe 5-chloro-2,6-difluoropyrimidyle-4 et un groupe 5-chloro-6-fluoropyrimidyle-4.

7. Mélanges de colorants selon au moins une des revendications précédentes, caractérisés en ce que les mélanges contiennent des colorants I et II à titre de substances réactives chromophores individuelles.

8. Mélanges de colorants selon au moins une des revendications précédentes, caractérisés en ce que le colorant I correspond à une des formules ci-après : 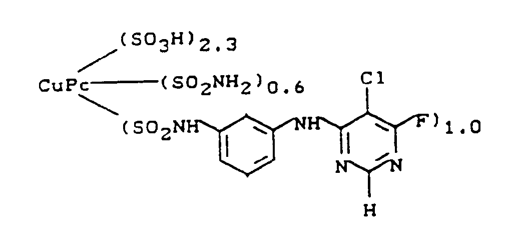 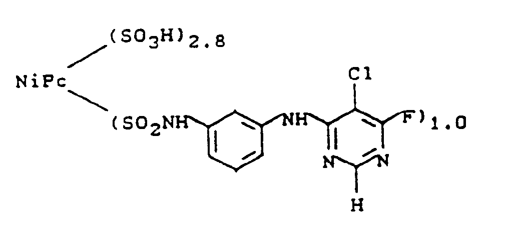 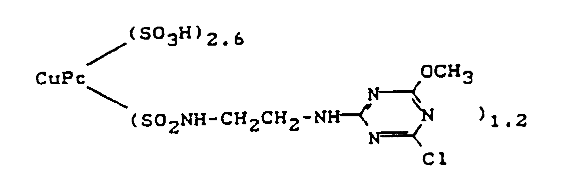 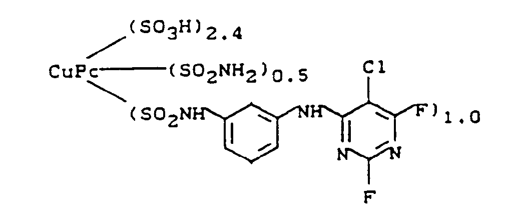 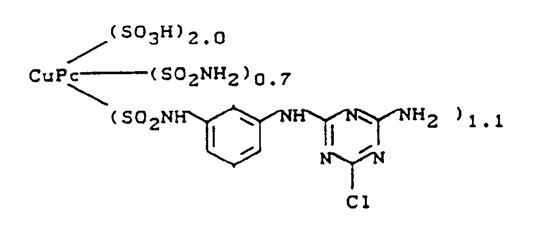 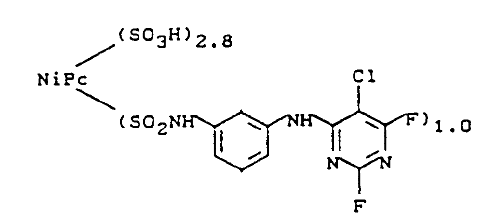 et le colorant II correspond à une des formules ci-après :

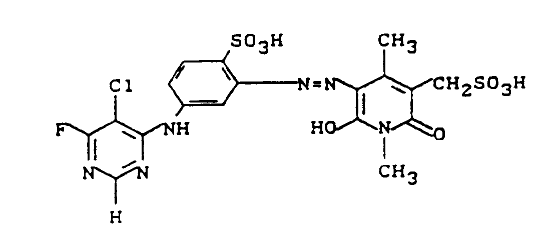

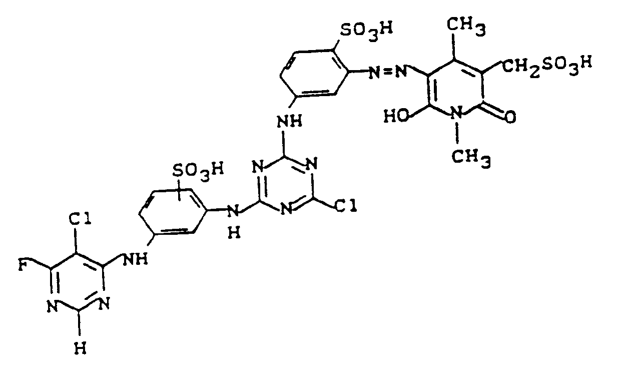

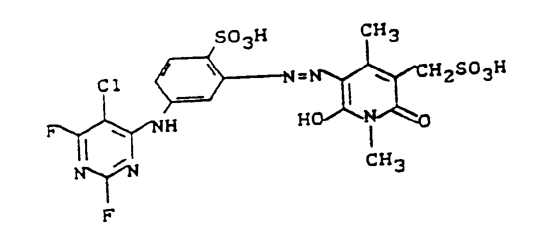

9. Mélanges de colorants selon au moins une quelconque des revendications précédentes, caractérisés en ce que la proportion des colorants I:II = 95:5 à 5:95.

10. Procédé pour colorer des matières contenant des groupes hydroxyle ou amide à l'aide d'un mélange de colorants, caractérisé en ce qu'on utilise un mélange selon au moins une des revendications précédentes.
